# EUROPÄISCHE PATENTANMELDUNG

(11) **EP 1 098 423 A1**
(43) Veröffentlichungstag der Anmeldung: **09.05.2001**
(21) Anmeldenummer: 00123356.8
(22) Anmeldetag: 30.10.2000
(51) Int. Cl.: H02K 7/06, F16H 25/20, A47B 9/00

(54) **Elektromotorischer Möbelantrieb**

(30) Priorität: 03.11.1999 DE 29919214 U
(71) Anmelder: Dewert Antriebs- und Systemtechnik GmbH & Co. KG, D-32278 Kirchlengern (DE)
(72) Erfinder: Roither, Andreas, 33649 Bielefeld (DE)
(74) Vertreter: Specht, Peter, Dipl.-Phys.

(57) **Zusammenfassung**

Ein elektromotorischer Möbelantrieb (10) mit einem Gehäuse (11), einem Antriebsmotor, einem Untersetzungsgetriebe (12, 13) und einer damit rotierend antreibbaren Spindel (16) sowie einem Flanschrohr (15) soll ausgelegt werden, daß die von der Leistung des Antriebsmotors aufgebrachte Schubkraft vergrößert wird, oder daß bei der gleichbleibenden Schubkraft die Antriebsleistung des Motors herabgesetzt werden kann.

Erfindungsgemäß ist innerhalb des Flanschrohres (15) wenigstens eine die Ausfahrbewegung des Hubrohres (17) unterstützende Gasfeder (21, 26, 27) derart angeordnet, daß deren Kolbenstangen (22, 29, 30) synchron mit dem Hubrohr (17) ein- und ausfahrbar sind. Die Spindel (16) ist eine Hohlspindel, sofern der Antrieb mit einer Gasfeder (21) ausgestattet ist. Sofern der Antrieb mit zwei Gasfedern (26, 27) ausgerüstet ist, liegen diese außerhalb des Hubrohres (17) und innerhalb des Flanschrohres (15) und sind im gleichen Winkelabstand zueinander versetzt.

## Beschreibung

Die Erfindung betrifft einen elektromotorischen Möbelantrieb, insbesondere eine Hubeinrichtung, mit einem Gehäuse, einem Antriebsmotor, einem Untersetzungsgetriebe und einer rotierend antreibbaren Spindel, auf die eine gegen Drehung gesicherte Spindelmutter aufgesetzt ist, die ein Hubrohr trägt, welches in einem festen äußeren Flanschrohr angeordnet und gegenüber diesem ein- und ausfahrbar ist.

Der in Frage kommende elektromotorische Möbelantrieb ist in vielen Ausführungsformen bekannt. Er wird zum Verstellen von Möbelbauteilen verwendet. Aus Sicherheitsgründen sind die Antriebsmotore Gleichstrommotore, die mit einer Sicherheitsspannung betrieben werden. Das Untersetzungsgetriebe ist üblicherweise ein Schneckentrieb, da das Drehzahlverhältnis des Rotors des Antriebsmotors zur Drehzahl der Spindel sehr groß sein muß. Demzufolge wird die linear bewegbare Spindelmutter mit einer äußerst niedrigen Geschwindigkeit verfahren. Auf das freie Ende des Hubrohres wird üblicherweise ein Anschlußteil in Form eines Gabelkopfes festgesetzt.

Während bei den bislang verwendeten Möbelantrieben in der Regel nur eine Kraft zur Überwindung des Eigengewichtes des Möbelbauteils aufgebracht werden mußte, werden nunmehr Antriebe gefordert, um auch belastete Möbelbauteile, beispielsweise Arbeitstischplatten und dergleichen mit darauf abgestellten Gegenständen höhenmäßig zu verstellen. Außerdem sollen bei derartigen Möbeln die Verstellgeschwindigkeiten erhöht werden.

Der Erfindung liegt die Aufgabe zugrunde, einen elektromotorischen Möbelantrieb der eingangs näher beschriebenen Art so weiter zu entwickeln, daß die von der Leistung des Antriebsmotors aufgebrachte Schubkraft vergrößert wird oder daß bei der gleichen Schubkraft die Antriebsleistung des Motors herabgesetzt werden kann.

Die gestellte Aufgabe wird gelöst, indem innerhalb des Flanschrohres wenigstens eine die Ausfahrbewegung des Hubrohres unterstützende Gasfeder derart angeordnet ist, daß deren Kolbenstangen synchron mit dem Hubrohr ein- und ausfahrbar sind.

Eine Gasfeder ist ein allgemein bekanntes und auch bewährtes Bauteil. Sie werden für viele Anwendungsfälle eingesetzt. Allerdings ist es nicht mehr möglich ein angeschlossenes Bauteil zu verschwenken oder anzuheben, wenn dazu verhältnismäßig große Kräfte notwendig sind. Durch die erfindungsgemäße Kombination eines Elektromotors mit einer Gasfeder läßt sich nunmehr die Schubkraft um die von der Gasfeder aufgebrachte Kraft erhöhen, so daß gegenüber den bekannten Möbelantrieben größere Lasten bewegt werden können, wobei auch noch die Verstellgeschwindigkeit erhöht wird. Die Gasfeder hat bei dem erfindungsgemäßen elektromotorischen Möbelantrieb bzw. dem Linearantrieb eine Doppelfunktion. Zunächst wird die auf angeschlossene Bauteile ausgeübte Kraft erhöht, wenn dieses Bauteil angehoben oder nach oben verschwenkt wird, andererseits wirkt das Eigengewicht beim Absenken beschleunigend. Dieses kann verhindert werden, da in diesem Falle die Gasfeder sinngemäß wie eine Bremse wirkt. Es ergibt sich dann noch ein wesentlicher Vorteil, daß die Bremskraft unterstützend von der Gasfeder aufgenommen wird. Zur einwandfreien Funtion ist es notwendig, daß die von der Spindelmutter und von der Gasfeder bzw. von den Gasfedern aufgebrachten Kräfte in gleicher Richtung wie die Spindelmutter wirken. Der Antrieb kann so ausgelegt werden, daß beim Einfahren der Spindelmutter nur die Kraft aufgebracht werden muß, die zum Einfahren der Kolbenstange der Gasfeder notwendig ist.

Eine konstruktiv einfache und kompakte Bauweise wird erreicht, wenn die Spindel eine Hohlspindel ist, in die die Gasfeder eingesetzt ist. Da die Spindel sich bei eingeschaltetem Antriebsmotor dreht, kann die Bohrung der Hohlspindel zwar so ausgelegt sein, daß die Gasfeder schließend darin eingesetzt werden kann, daß jedoch keine Reibungskräfte auftreten, die die Leistung beeinflussen würden. Bei einer entsprechenden Gestaltung des Antriebes sind keine Befestigungselemente für die Gasfeder notwendig, da sie sich am Gehäuse oder Anschlußteilen abstützen kann. Bei dieser kompakten Ausführung kann der Möbelantrieb allerdings nur mit einer Gasfeder ausgestattet werden. Die Länge ist jedoch nur ein klein wenig geringer, als die Länge der Spindel. Wenn jedoch die von den Gasfedern aufgebrachten Kräfte erhöht werden sollen, ist es zweckmäßig, wenn der Möbelantrieb mit einer Gasfeder oder mit mehreren Gasfedern ausgerüstet ist, die außerhalb der Spindel und innerhalb des Flanschrohres und im gleichen Winkelabstand zueinander angeordnet sind, sofern mehrere Gasfedern vorhanden sind. Die Kräfte summieren sich dann.

Sofern der elektromotorische Möbelantrieb mit einer außerhalb der Spindel angeordneten Gasfeder oder auch mit mehreren außerhalb der Spindel angeordneten Gasfedern ausgestattet ist, ist vorgesehen, daß das Hubrohr als Mehrkammerrohr ausgebildet ist, wobei die Mittellängsachsen der einzelnen Kammern parallel und im Abstand zueinander und zur Mittellängsachse der Spindel derart verlaufen, daß in einer Kammer die Spindel und in der anderen Kammer oder in den anderen Kammern die Gasfeder bzw. die Gasfedern angeordnet sind. Im Hinblick auf die Kraft und die Geschwindigkeit des Hubrohres ergeben sich dadurch keine Verbesserungen, jedoch ist die Gasfeder bzw. sind die Gasfedern unsichtbar.

Sofern der elektromotorische Möbelantrieb mit einer Gasfeder außerhalb der Spindel angeordnet ist, ist vorgesehen, daß das Hubrohr im Querschnitt etwa achtförmig ist. Diese Ausführung ist dann zweckmäßig, wenn der Antrieb mit einer außerhalb der Spindel abgeordneten Gasfeder ausgestattet ist.

Das äußere Flanschrohr könnte bei einer solchen Ausführung dann im Querschnitt nierenförmig gestaltet sein. Die einseitige Einziehung liegt dann im Bereich zwischen den beiden Kammern des Hubrohres. Sofern jedoch nur die Spindel innerhalb einer Kammer liegt und die Gasfeder in dem freien Innenraum zwischen der Innenfläche des Hubrohres und der Spindel angeordnet ist, könnte das Rohr im Querschnitt ovalförmig gestaltet sein. Eine Material sparende Ausführung ergibt sich, wenn das Flanschrohr in Umfangsrichtung innenseitig profiliert ist. Diese Profilierung besteht zweckmäßigerweise aus in Längsrichtung des Flanschrohres verlaufenden Stegen und Einziehungen.

Unabhängig von der jeweiligen Ausführung des elektromotorischen Möbelantriebes sind zweckmäßigerweise die Kolbenstangen gegenüber dem dem Antriebsmotor abgewandten Ende des Flanschrohres ein- und ausfahrbar und miteinander sowie mit dem Hubrohr gekoppelt. Dadurch wird ein Synchronlauf zwischen den Kolbenstangen der Gasfedern und dem Hubrohr erreicht, wobei durch die Verbindung mit dem Hubrohr die volle Kraft übertragen wird. Bei einer Ausführung, bei der in dem Flanschrohr zwei Gasfedern um einen Winkel von 180° versetzt zueinander angeordnet sind, sind zweckmäßigerweise die Kolbenstange und das Hubrohr durch einen Querstift miteinander gekoppelt. Bei einem Antrieb mit mindestens zwei Gasfedern kann es zweckmäßig sein, wenn die dem Antriebsmotor zugewandten Enden durch eine Bolzenverbindung mit dem Flanschrohr gekoppelt sind.

In weiterer Ausgestaltung ist noch vorgesehen, daß die Gasfeder bzw. die Gasfedern steuerbar sind. Dadurch ist es möglich, daß das an den Möbelantrieb angeschlossene Bauteil in jeder Stellung angehalten wird. Die Steuerung erfolgt vorzugsweise durch ein Ventil. Durch die Steuerung des Gasstromes wird eine Bremswirkung erzeugt, so daß dadurch ggf. auch die Geschwindigkeit des Abtriebsgliedes des Möbelantriebes geregelt werden kann. Es ist ferner noch vorgesehen, daß der Möbelantrieb mit einer Ausrückvorrichtung ausgestattet werden kann, so daß das Absenken des angeschlossenen Bauteils mit einer höheren Geschwindigkeit erfolgen kann. Gemäß einer ersten Lösung für die Ausrückbarkeit ist vorgesehen, daß auf den Abtriebszapfen des Antriebes eine erste Kupplungsscheibe drehfest aufgesetzt ist, daß auf das zugeordnete Ende der Stellspindel eine zweite Kupplungsscheibe verdrehsicher aufgekeilt ist, daß die erste und die zweite Kupplungsscheibe durch eine in axiale Richtung verfahrbare Kupplungstrommel in eine Mitnahmeverbindung bringbar sind, und daß die erste Kupplungsscheibe und die Kupplungstrommel miteinander in Eingriff bringbare, derart gestaltete Mitnahmeflächen aufweisen, daß bei einer aufwärts gerichteten Verstellbewegung des Bauteils mittels des Antriebes die Kupplungstrommel durch die erste Kupplungsscheibe synchron antreibbar ist und bei einer gleichsinnigen Verstellbewegung des Möbelbauteils von Hand die Kupplungstrommel bei Stillstand der ersten Kupplungsscheibe eine Drehung ausführt. Zur einfachen Bedienung ist dann vorgesehen, daß an der Kupplungstrommel ein Ausrückelement angeordnet und gegenüber der zweiten Kupplungsscheibe axial verschiebbar ist und welches mittels Druckfedern in Eingriff mit der ersten Kupplungsscheibe steht.

Durch das Zusammenwirken der Kupplungstrommel mit den beiden Kupplungsscheiben ist es nunmehr möglich, daß im Normalbetrieb sowohl die aufwärts als auch die abwärts gerichtete Verstellbewegung des Möbelbauteils bei eingeschaltetem Antrieb erfolgt. Da jedoch die Kupplungstrommel in axialer Richtung verfahrbar ist, besteht die Möglichkeit, daß die im Normalfall miteinander in Eingriff stehenden Profilierungen der Mitnahmeflächen außer Eingriff gebracht werden, so daß auch die abwärts gerichtete Bewegung des angeschlossenen Bauteils in äußerst kurzer Zeit mit einer entsprechenden Geschwindigkeit durchgeführt werden kann. Soll jedoch das Möbelbauteil aufwärts von Hand verstellt werden, erfolgt der Antrieb sinngemäß rückwärts, indem der Anlenkhebel die Spindelmutter mitnimmt. Da die Stellspindel des Antriebes nicht selbsthemmend ist, wird sie in Drehung versetzt. Dadurch wird auch die zweite Kupplungsscheibe und die damit drehfest verbundene Kupplungstrommel in Drehung versetzt. Durch die entsprechend ausgelegte Profilierung der Mitnahmeflächen ist es möglich, daß sich die Kupplungstrommel gegenüber der stillstehenden, ersten Kupplungsscheibe verdreht. Dies wird ermöglicht, da die Kupplungstrommel in axialer Richtung verschiebbar ist. Das Ausrückelement kann eine Klaue, ein Zugelement, beispielsweise ein Bowdenzug oder ein ähnliches Teil sein. Die axiale Verschiebbarkeit gegenüber der zweiten Kupplungsscheibe wird beispielsweise durch eine entsprechend ausgelegte Paßfederverbindung oder einen Vielkeil erreicht. Die Druckfedern bewirken, daß bei Nichtbetätigung des Ausrückelementes die Profilierungen der Mitnahmeflächen in Eingriff stehen. Beim Hochfahren des angeschlossenen Bauteils von Hand ermöglichen sie die zur Drehung der Kupplungstrommel notwendige Axialverschiebung.

Gemäß einer zweiten Lösung für die Ausrückbarkeit ist vorgesehen, daß das Schneckenrad des Antriebes drehbar auf einem auf der Stellspindel fest angeordneten Führungskörper gelagert ist, auf dem ein Kupplungsrad drehfest, jedoch axial verschiebbar angeordnet ist, welches mit dem Schneckenrad in eine Eingriffs- und Außereingriffsstellung bringbar ist. Bei einer solchen Lösung wird das Schneckenrad so gestaltet, daß im Normalbetriebszustand die Antriebsverbindung zur Stellspindel vom Schneckenrad aus über die Kupplungsscheibe und den Führungskörper übertragen wird. Soll jedoch die abwärts gerichtete Bewegung in kürzester Zeit mit einer entsprechend Absenkgeschwindigkeit erfolgen, wird die Kupplungsscheibe außer Eingriff mit dem Schneckenrad gebracht. Die Stellspindel sowie der Führungskörper und die Kupplungsscheibe drehen sich dann bei stillstehendem Schneckenrad bzw. bei stillstehendem Antrieb. Durch eine solche Gestaltung werden die Abmessungen des Möbelantriebes gegenüber Antrieben ohne Ausrückbarkeit, wenn überhaupt, nur unwesentlich geändert. Zur Kopplung des Schneckenrades mit dem Kupplungsrad ist vorgesehen, daß das Schneckenrad an der dem Kupplungsrad zugewandten Seite eine kreisringförmige Verzahnung und das Kupplungsrad an der zugeordneten Seite eine entsprechende Gegenverzahnung aufweist. Dadurch wird eine schlupffreie und hochbelastbare Verbindung geschaffen. Dabei ist es dann zweckmäßig, wenn die Zähne der Verzahnungen sägezahnförmig gestaltet und jeder Zahn aus einer gegenüber den Drehachsen steilen und einer flachen Flanke begrenzt sind. Im Normalbetriebszustand wird bei einer Aufwärtsbewegung eines Möbelteils das Drehmoment über die steilen Flanken der Verzahnungen des Schneckenrades und des Kupplungsrades übertragen. Diese Drehmomentübertragung erfolgt jedoch nur in der entsprechenden Drehrichtung. In der entgegengesetzten Drehrichtung, beispielsweise wenn das angeschlossene Bauteil abgesenkt wird, dreht sich das Kupplungsrad aus dem Schneckenrad heraus und verschiebt sich dabei axial.

Anhand der beiliegenden Zeichnungen wird die Erfindung noch näher erläutert. Es zeigen:
- Fig. 1 - 3: den erfindungsgemäßen elektromotorischen Möbelantrieb in drei verschiedenen Ausführungen,
- Fig. 4 u. 5: das Hub- und Flanschrohr im Querschnitt in zwei verschiedenen Ausführungen,
- Fig. 6: eine erste Ausführungsform eines Möbelantriebes mit einer Ausführungsform in einem Teilschnitt und
- Fig. 7: eine zweite Möglichkeit der Ausrückbarkeit des Antriebes ebenfalls im Teilschnitt.

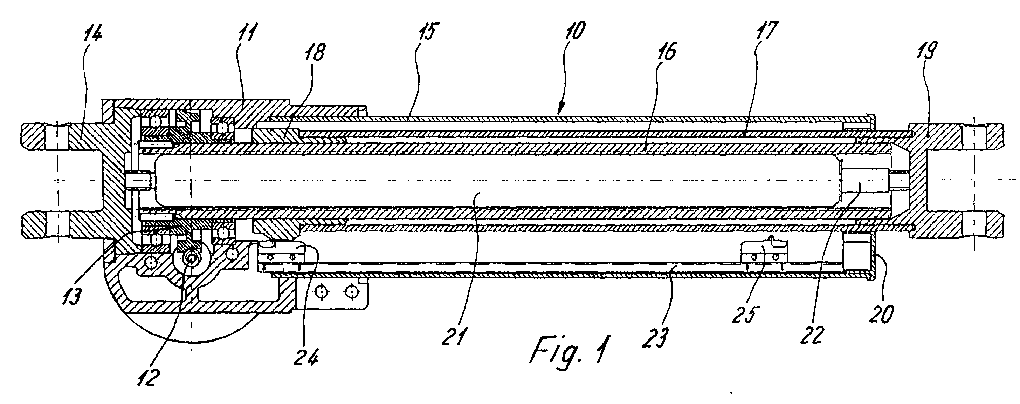

Der in den Figuren 1 - 3 dargestellte elektromotorische Möbelantrieb 10 weist ein Gehäuse 11 auf, welches so ausgelegt ist, daß darin die vom nicht dargestellten Antriebsmotor angetriebene Schnecke 12 und das damit in Eingriff stehende Schneckenrad 13 gelagert werden können. Anstelle des Schneckentriebes könnte auch eine andere Art des Untersetzungsgetriebes in das Gehäuse 11 eingebaut werden. Die Lagerung erfolgt über Wälzlager. An dieser Seite ist das Gehäuse 11 mit einem Gabelkopf 14 ausgestattet, um den elektromotorischen Möbelantrieb 10 an in ortsfestes Bauteil anzuschließen. Das dem Gabelkopf 14 gegenüberliegende Ende des Gehäuses 11 ist offen. In diese Öffnung ist ein Flanschrohr 15 fest eingesetzt. Dieses Flanschrohr 15 bildet im Zusammenhang mit dem Gehäuse 11 die Außenseite des elektromotorischen Möbelantriebes 11. Das Schneckenrad 13 ist fest mit einer Spindel 16 verbunden. Dazu ist die Spindel 16 im dargestellten Ausführungsbeispiel in eine Bohrung des Schneckenrades 13 fest eingesetzt. Zwischen dem Flanschrohr 15 und der Spindel 16 liegt bei der Ausführung nach der Figur 1 das Hubrohr 17, welches fest mit der auf der Spindel 16 aufgesetzten Spindelmutter 18 verbunden ist. Das freie, dem Gehäuse 11 abgewandte Ende des Hubrohres 17 trägt einen weiteren Gabelkopf 19, um den elektromotorischen Möbelantrieb 10 an ein zu verstellendes, nicht dargestelltes Bauteil anzuschließen. Das Flanschrohr 15 ist an der dem Gehäuse 11 abgewandten Seite durch eine Endkappe 20 verschlossen.

Bei der Ausführung nach der Figur 1 ist die Spindel 16 eine Hohlspindel. In die Bohrung ist eine Gasfeder 21 eingesetzt. Diese Gasfeder stützt sich mit einem Ende am Gabelkopf 14 ab, könnte sich jedoch auch an Teilen des Gehäuses 11 abstützen. Die ein- und ausfahrbare Kolbenstange 22 der Gasfeder 21 stützt sich am Gabelkopf 19 ab.

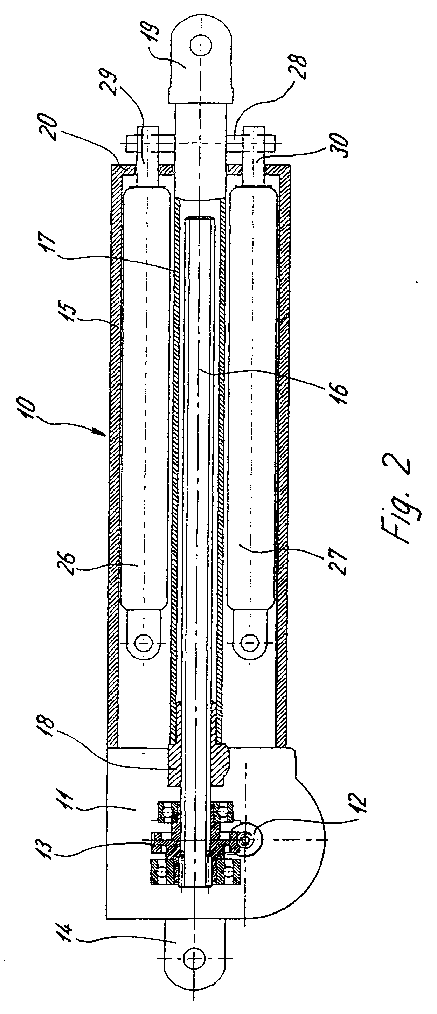

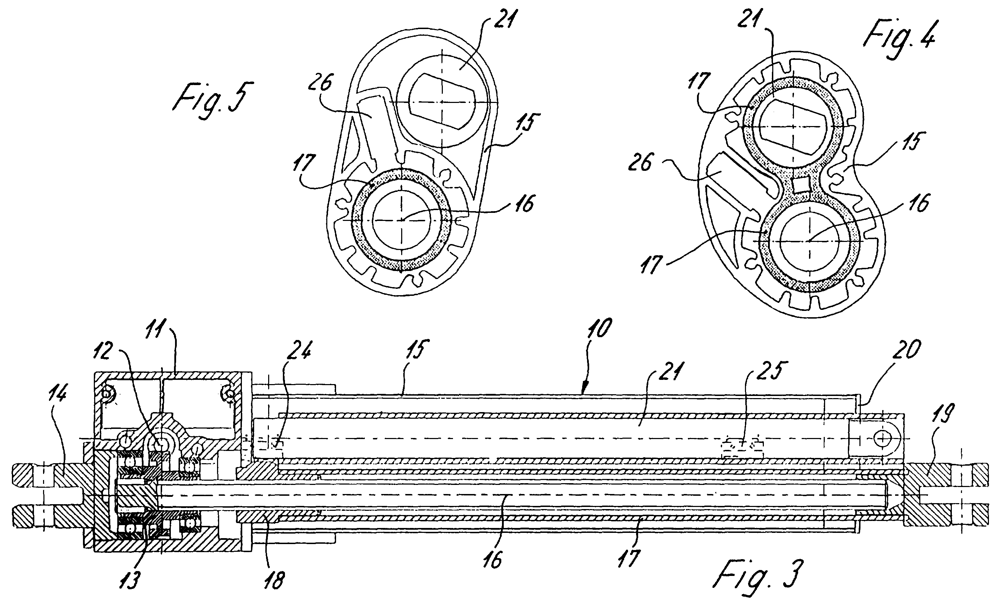

Im Inneren des Flanschrohres 15 ist noch eine durchgehende Endschalterleiste 23 eingesetzt, die zwei im Abstand zueinander stehende Endschalter 24, 25 trägt, die die Endstellungen der Spindelmutter 18 begrenzen. Vom grundsätzlichen Aufbau unterscheiden sich die Antriebe nach den Figuren 2 und 3 nicht. Die gleichen Bauteile sind deshalb auch mit den gleichen Bezugsziffern versehen. Die Gasfedern 26, 27 liegen bei der Ausführung nach der Figur 2 in dem Zwischenraum zwischen dem Hubrohr 17 und dem Flanschrohr 15.

Bei der Ausführung gemäß den Figuren 3 ― 5 ist der elektromotorische Möbelantrieb 10 ebenfalls nur mit einer Gasfeder 21 ausgestattet, die jedoch parallel und im Abstand zur Spindel 16 verläuft, d. h. sie liegt in dem freien Innenraum zwischen der Innenfläche des Flanschrohres 15 und dem Hubrohr 17. Bei dieser Ausführung liegt demzufolge die Wirkrichtung der Gasfeder 21 parallel und im Abstand zur Wirkrichtung des Rohres 17. Diese Ausführung ist dann vorteilhaft, wenn die Hubkraft einer Gasfeder 21 ausreichend ist, jedoch auf eine kostenintensivere Hohlspindel gemäß der Figur 1 verzichtet werden soll.
Voraussetzung ist jedoch, daß das durch den Versatz der Gasfeder 21 auftretende Moment die Funktionen des Möbelantriebes nicht stört.

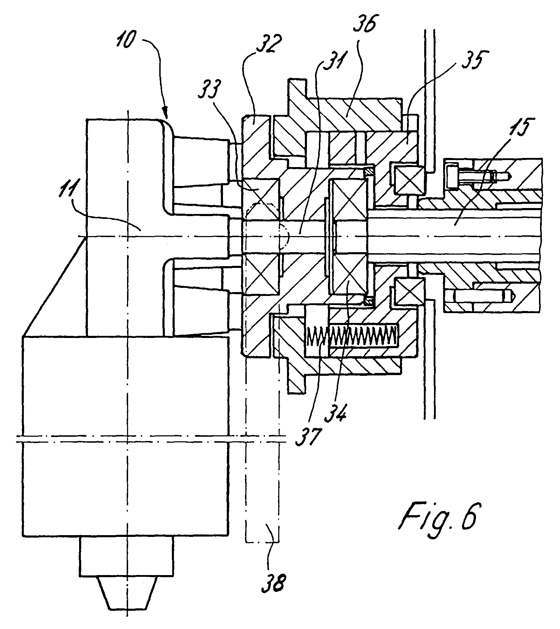

Die Figuren 4 und 5 zeigen das Flanschrohr 15 und das Hubrohr 17 mit der Spindel 16 und der Gasfeder 21 im Querschnitt in zwei verschiedenen Ausführungen. Bei der Figur 4 ist das Hubrohr 17 ein Doppelrohr mit zwei parallel und im Abstand zueinander verlaufenden Kammern. Im Querschnitt ist das Hubrohr 17 etwa achtförmig gestaltet.

In einer Kammer ist die Spindel 16 angeordnet und in der anderen Kammer ist die Gasfeder 21 eingesetzt. Vorteilhaft ist bei dieser Ausführung, daß die Gasfeder 21 unsichtbar ist. Im Querschnitt ist das Flanschrohr 15 nierenförmig gestaltet, wobei die seitliche Einziehung etwa mittig zwischen den beiden Kammern des Hubrohres 17 liegt.

Bei der Figur 5 ist der Querschnitt des Flanschrohres 15 etwa ovalförmig gestaltet. Die Gasfeder 21 ist in dem freien Raum zwischen der Innenfläche des Flanschrohres 15 und dem Hubrohr 17 angeordnet. Bei beiden Ausführungen schließt sich an das Hubrohr 17 ein in Längsrichtung verlaufender Schlitz 26 an, in den die Endschalterleiste 23 in nicht dargestellter Weise eingesetzt werden kann.

Bei den Ausführungen nach den Figuren 4 und 5 ist das Flanschrohr 15 innenseitig zumindest teilweise profiliert, d. h. an der Innenfläche befinden sich in Längsrichtung des Flanschrohres 15 verlaufende Nuten und entsprechende Stege. Dadurch wird Material gespart und eine ausreichende Belastbarkeit erreicht.

Die dem Schneckentrieb zugewandten Enden sind mittels Laschen am Flanschrohr 15 befestigt. Die ein- und ausfahrbaren Kolbenstangen gemäß der Figur 2 sind durch einen Querstift 28 miteinander verbunden. Dieser Querstift 28 durchdringt auch den Gabelkopf 19, so daß der Gabelkopf bzw. das Hubrohr 17 und die Kolbenstangen 29, 30 stets synchron ausgefahren werden. Die beiden Gasfedern 26, 27 sind um einen Winkel von 180° zueinander versetzt. Es ist im Gegensatz zu der dargestellten Ausführung auch möglich, daß mehr als zwei Gasfedern in den Zwischenraum zwischen dem Flanschrohr 15 und dem Hubrohr 17 eingesetzt werden.

Damit jedoch Kippmomente vermieden werden, müßte der Winkelversatz stets gleich sein.

Die Figur 6 zeigt eine erste Ausrückmöglichkeit des elektromotorischen Möbelantriebes. Auf den Abtriebszapfen 31 ist eine erste Kupplungsscheibe 32 drehfest aufgesetzt, die aus einem dem Antrieb 11 zugewandten Flansch und einer daran angesetzten Nabe besteht. In einen Lagersitz der ersten Kupplungsscheibe 32 ist ein Wälzlager 33 in Form eines Rillenkugellagers gelagert. Der Abtriebszapfen 31 endet im Abstand zum Ende der ersten Kupplungsscheibe 32, welches dem Antrieb 11 abgewandt liegt. In die erste Kupplungsscheibe 32 ragt das zugewandte Ende der fluchtend zum Abtriebszapfen 31 liegenden Stellspindel 15 ein. Auf einen abgesetzten Zapfen der Stellspindel 15 ist ein weiteres Wälzlager 34 in Form eines Rillenkugellagers aufgekeilt, welches mit seinem Außenring in einer Aussparung der ersten Kupplungsscheibe 32 liegt. An der der ersten Kupplungsscheibe 32 abgewandt liegenden Seite ist auf die Stellspindel 15 eine zweite Kupplungsscheibe 35 drehfest aufgesetzt. Mit dieser zweiten Kupplungsscheibe 35 steht eine Kupplungstrommel 36 über eine Paßfeder oder eine Vielkeilverbindung in einer Mitnahmeverbindung. die Kupplungstrommel 36 ist gegenüber der zweiten Kupplungsscheibe 35 axial verschiebbar. Die äußere, dem Antrieb 11 abgewandt liegende Ringfläche der ersten Kupplungsscheibe 32 ist mit einer nicht dargestellten Verzahnung versehen, die mit einer entsprechend ausgelegten Verzahnung der zugeordneten Stirnfläche der Kupplungstrommel 36 im Normalbetriebszustand in Eingriff steht. In der zweiten Kupplungsscheibe 35 sind im äußeren Umfangsbereich zur ersten Kupplungsscheibe 32 hin offene Bohrungen vorgesehen, in die Druckfedern 37 eingesetzt sind. Diese Druckfedern 37 drücken die Verzahnungen der ersten Kupplungsscheibe 32 und der Kupplungstrommel 36 ineinander. An die Kupplungstrommel 36 ist ein Ausrückelement angeordnet, welches im dargestellten Ausführungsbeispiel eine in strichpunktierten Linien angedeutete Klaue 38 ist. Bei Betätigung der Klaue 38 von Hand wird die Kupplungstrommel 36 von der ersten Kupplungsscheibe 32 wegbewegt, so daß die Verzahnungen bzw. Profilierungen außer Eingriff kommen. Dadurch wird der Antriebszug für die Spindelmutter 15 unterbrochen bzw. ausgerückt. Das nicht dargestellte, abwärts zu bewegende Bauteil fällt mit dann mit einer relativ großen Geschwindigkeit von der oberen in die untere Lage, da ein auf die Welle aufgesetzter Anlenkhebel gegen das zugewandte Stirnende der auf die Spindel 15 aufgesetzten Spindelmutter drückt, die gegen Drehung gesichert ist. Sobald die Klaue 38 losgelassen wird, wird die Abwärtsbewegung des Bauteils abgebrochen.

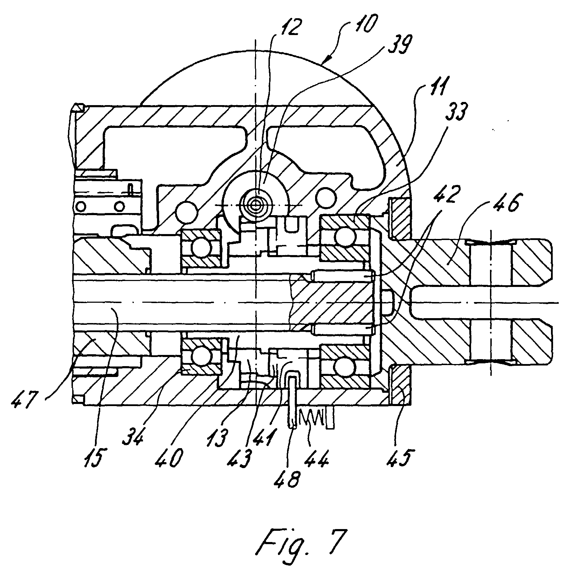

Die Figur 7 zeigt eine weitere Möglichkeit der Ausrückbarkeit. In das Gehäuse 11 ist ein nicht näher erläuterter Antrieb 39 installiert. Der Antrieb 39 treibt über die Schnecke 12 ein Schneckenrad 13 an. Das Schneckenrad 13 ist frei drehbar auf einem Führungskörper 40 gelagert. Auf diesem Führungskörper 40 ist außerdem ein Kupplungsrad 41 drehfest aufgesetzt, welches im Normalbetriebszustand mit dem Schneckenrad 13 in einer Mitnahmeverbindung steht. Der Führungskörper 40 ist drehfest auf die Spindel 15 aufgesetzt. Dies erfolgt durch in axialer Richtung der Spindel 15 verlaufende Stifte 42. Die Mitnahmeverbindung zwischen dem Kupplungsrad 41 und dem Schneckenrad 13 erfolgt durch eine allgemein bekannte Verzahnung 43. Das Kupplungsrad 41 ist umfangsseitig mit einer umlaufenden Nut versehen, in die ein Ausrückelement in Form eines Ausrückhebels 48 eingreift. Dieser Ausrückhebel 48 ist durch eine Feder 44 derart belastet, daß im Normalzustand das Kupplungsrad 41 mit dem Schneckenrad 13 über die entsprechenden Verzahnungen 43 in Eingriff steht. Zur Lagerung der Spindel 15 sind auf die beiden Stirnenden des Führungskörpers 40 Rillenkugellager 33, 34 aufgesetzt. Dazu sind die Enden des Führungskörpers 40 abgesetzt. Bei dieser Ausführung ist das Gehäuse 11 des elektromotorischen Möbelantriebes 10 an der dem Führungskörper 40 zugeordneten Seite mittels eines Deckels 45 verschlossen. Durch eine zentrische Öffnung des Deckels 45 ragt ein Gabelkopf 46, um den elektromotorischen Möbelantrieb 10 in nicht näher dargestellter Weise aufzuhängen. Auf die Spindel 15 ist eine gegen Drehung gesicherte Spindelmutter 47 aufgesetzt, die das nicht dargestellte Hubrohr bewegt, welches von einem festen Flanschrohr umgeben ist.

Wie die Figur zeigt, liegt das Kupplungsrad 41 an der der Spindelmutter 47 abgewandten Seite des Schneckenrades 13. Die miteinander in Eingriff stehenden Verzahnungen 43 liegen auf einem Ring. Die Zähne der Verzahnungen sind asymmetrisch nach Art von Sägezähnen ausgebildet. Demzufolge wird jeder Zahn von einer steilen, parallel oder annähernd parallel zu den Drehachsen des Schneckenrades 13 und des Kupplungsrades 41 stehenden Flanke und einer flachen Flanke begrenzt. Beim Einschalten des elektromotorischen Möbelantriebes 10 zum Hochfahren eines angeschlossenen Bauteiles erfolgt die Übertragung des Drehmomentes durch die steilen Flanken der Verzahnungen 43. Wird das Möbelbauteil bei eingeschaltetem elektromotorischen Möbelantrieb 10 abgesenkt und dabei beispielsweise durch ein Körperteil blockiert, dreht sich das Kupplungsrad 41 gegenüber dem Schneckenrad 13. Es verschiebt sich dabei entgegen der Wirkung der Feder 44 axial, wodurch sinngemäß ein Sicherheitsfreilauf gegeben ist. Soll jedoch das Möbelbauteil durch Ausrücken des Antriebes mit wesentlich höherer Geschwindigkeit abgesenkt werden, wird durch Betätigung des Ausrückhebels 48 die Verzahnung des Kupplungsrades 41 außer Eingriff mit der Verzahnung des Schneckenrades 13 gebracht. Da die Spindel 15 nicht selbsthemmend ist, kann sich diese ungebremst drehen. Wesentlich ist bei dieser Ausführung die drehfeste Verbindung zwischen der Spindel 15 und dem Führungskörper 40 sowie das mit dem Schneckenrad 13 in Eingriff stehende Kupplungsrad 41.

Die Erfindung ist nicht auf die dargestellten Ausführungsbeispiele beschränkt. Wesentlich ist die Gasfeder 21 bzw. wesentlich sind die Gasfedern 26, 27, deren Kolbenstangen 22, 29 und 30 synchron mit dem Hubrohr 17 ein- bzw. ausgefahren werden.

## Patentansprüche

1. Elektromotorischer Möbelantrieb, insbesondere Hubeinrichtung mit einem Gehäuse, einem Antriebsmotor, einem Untersetzungsgetriebe, einer damit rotierend antreibbaren Spindel, auf die eine gegen Drehung gesicherte Spindelmutter aufgesetzt ist, die ein Hubrohr trägt, welches in einem festen Flanschrohr angeordnet und gegenüber diesem ein- und ausfahrbar ist**, dadurch gekennzeichnet, daß** innerhalb des Flanschrohres (15) wenigstens eine die Ausfahrbewegung des Hubrohres (17) unterstützende Gasfeder (21, 26, 27) derart angeordnet ist, daß deren Kolbenstangen (22, 29, 30) synchron mit dem Hubrohr (17) ein-und ausfahrbar sind.

2. Elektromotorischer Möbelantrieb nach Anspruch 1, **dadurch gekennzeichnet, daß** die Spindel (16) eine Hohlspindel ist, in die die Gasfeder (21) eingesetzt ist.

3. Elektromotorischer Möbelantrieb nach Anspruch 1, **dadurch gekennzeichnet, daß** der Möbelantrieb mit einer Gasfeder (21) oder mit mehreren Gasfedern (26, 27) ausgerüstet ist, die außerhalb der Spindel (16), vorzugsweise außerhalb des Hubrohres (17) und innerhalb des Flanschrohres (15) angeordnet ist bzw. sind und daß sie gegebenenfalls im gleichen Winkelabstand zueinander stehen.

4. Elektromotorischer Möbelantrieb nach Anspruch 1, **dadurch gekennzeichnet,** daß das Hubrohr (17) als Mehrkammerrohr ausgebildet ist, daß die Mittellängsachsen der einzelnen Kammer parallel und im Abstand zueinander sowie zur Mittellängsachse der Spindel 16 verlaufen, und daß in einer Kammer die Spindel (16) und in der anderen Kammer oder in den anderen Kammern die Feder (21) bzw. die Gasfedern (26, 27) angeordnet sind.

5. Elektromotorischer Möbelantrieb, der mit einer Gasfeder und einer Spindel ausgerüstet ist nach Anspruch 4, **dadurch gekennzeichnet,** daß das Hubrohr (17) im Querschnitt etwa achtförmig gestaltet ist.

6. Elektromotorischer Möbelantrieb, bei dem die Gasfeder in dem Innenraum zwischen der Innenfläche des Flanschrohres (15) und dem Hubrohr (17) angeordnet ist nach einem oder mehreren der vorhergehenden Ansprüche 1-4, **dadurch gekennzeichnet,** daß das Flanschrohr (15) im Querschnitt ovalförmig gestaltet ist.

7. Elektromotorischer Möbelantrieb, bei dem das Hubrohr (17) zwei einzelne Kammern aufweist, nach Anspruch 4, **dadurch gekennzeichnet,** daß das Flanschrohr (15) im Querschnitt nierenförmig ausgebildet ist.

8. Elektromotorischer Möbelantrieb nach einem oder mehreren der vorhergehenden Ansprüche 1-7, **dadurch gekennzeichnet**, daß die Innenfläche des Hubrohres (17) und/oder des Flanschrohres (15) zumindest teilweise in Umfangsrichtung profiliert ist.

9. Elektromotorischer Möbelantrieb nach Anspruch 8, **dadurch gekennzeichnet,** daß die Profilierung aus Stegen und entsprechenden Einziehungen gebildet ist.

10. Elektromotorischer Möbelantrieb nach einem oder mehreren der vorhergehenden Ansprüche 1-9, **dadurch gekennzeichnet, daß** die Kolbenstangen (29, 30) gegenüber dem dem Antriebsmotor abgewandten Ende des Flanschrohres (15) ein- und ausfahrbar und miteinander sowie mit dem Hubrohr (17) gekoppelt sind, wobei die Kolbenstangen (29, 30) und das Hubrohr (17) vorzugsweise durch einen Querstift (28) miteinander gekoppelt sind.

11. Elektromotorischer Möbelantrieb an einem oder mehreren der vorhergehenden Ansprüche 1 bis 10, dadurch gekennzeichnet, daß die Gasfedern (26, 27) an der dem Antriebsmotor zugewandten Seite mittels einer Bolzenverbindung mit dem Flanschrohr verbunden sind.

12. Elektromotorischer Möbelantrieb nach einem der Ansprüche 1 bis 11, dadurch gekennzeichnet, daß die Gasfeder (21) oder die Gasfedern (26, 27) steuerbar, vorzugsweise mittels eines Ventiles derart steuerbar sind, daß eine Bremswirkung erzeugbar ist.

13. Elektromotorischer Möbelantrieb nach einem oder mehreren der vorhergehenden Ansprüche 1 bis 11, dadurch gekennzeichnet, daß auf den Abtriebszapfen (31) des Antriebes (11) eine erste Kupplungsscheibe (32) drehfest aufgesetzt ist, daß auf das zugeordnete Ende der Stellspindel (15) eine zweite Kupplungsscheibe (35) verdrehsicher aufgekeilt ist, daß die erste und die zweite Kupplungsscheibe (32, 35) durch eine in axialer Richtung verfahrbare Kupplungstrommel (36) in eine Mitnahmeverbindung bringbar sind, und daß die erste Kupplungsscheibe (32) und die Kupplungstrommel (36) miteinander in Eingriff bringbare, derart gestaltete Mitnahmeflächen aufweisen, daß bei einer aufwärts gerichteten Verstellbewegung des angeschlossenen Bauteils mittels des Antriebes (11) die Kupplungstrommel (36) durch die erste Kupplungsscheibe (32) synchron antreibbar ist und bei einer gleichsinnigen Verstellbewegung des Möbelbauteils von Hand die Kupplungstrommel (36) bei Stillstand der ersten Kupplungsscheibe (32) eine Drehung ausführung.

14. Elektromotorischer Möbelantrieb nach Anspruch 13, dadurch gekennzeichnet, daß an der Kupplungstrommel (36) ein Ausrückelement (38) angeordnet und gegenüber der zweiten Kupplungsscheibe (35) derart axial verschiebbar ist sowie mittels Druckfedern (37) in Eingriff mit der ersten Kupplungsscheibe (32) steht.

15. Elektromotorischer Möbelantrieb nach einem oder mehreren der vorhergehenden Ansprüche 1 bis 12, dadurch gekennzeichnet, daß das Schneckenrad (13) des Antriebes (39) drehbar auf einem auf der Stellspindel (15) fest angeordneten Führungskörper (40) gelagert ist, auf dem ein Kupplungsrad (41) drehfest, jedoch axial verschiebbar angeordnet ist, welches mit dem Schneckenrad (13) in eine Eingriffs- und in eine Außereingriffsstellung bringbar ist.

16. Elektromotorischer Möbelantrieb nach Anspruch 15, dadurch gekennzeichnet, daß das Schneckenrad (13) an der dem Kupplungsrad (41) zugewandten Seite eine kreisringförmige Verzahnung (43) und das Kupplungsrad (41) an der zugewandten Seite eine entsprechende Gegenverzahnung aufweist.
